# EUROPEAN PATENT SPECIFICATION

(11) **EP 3 272 595 B1**
(45) Date of publication and mention of the grant of the patent: **20.03.2019**
(21) Application number: 17182601.9
(22) Date of filing: 21.07.2017
(51) Int. Cl.: B60S 1/04, B60S 1/24

(54) **A BRACKET FOR AN ELECTRICAL MOTOR AND A WIPER SYSTEM HAVING SUCH BRACKET**
HALTERUNG FÜR EINEN ELEKTROMOTOR UND WISCHANLAGE MIT SOLCH EINER HALTERUNG
SUPPORT DESTINÉ À UN MOTEUR ÉLECTRIQUE ET SYSTÈME D'ESSUIE-GLACE COMPORTANT UN TEL SUPPORT

(30) Priority: 22.07.2016 CN 201610584995
(43) Date of publication of application: 24.01.2018
(73) Proprietor: Taizhou Valeo Wenling Automotive Systems Co. Ltd., Zhejiang 317500 (CN)
(72) Inventor: GRANDJEAN, Denis, WENLING, Zhejiang 317500 (CN); CHEN, Jian, WENLING, Zhejiang 317500 (CN); HONG, Haoyi, SHANGHAI, 200233 (CN)
(74) Representative: Callu-Danseux, Violaine

(56) References cited:
- DE-A1-102010 062 986
- DE-A1-102014 222 124
- FR-A1- 2 774 340
- FR-A1- 2 863 987

## Description

### TECHNICAL FIELD

The present invention relates to the field of vehicles and, more particularly, to a bracket for an electrical motor of a wiper of a vehicle and to a wiper system having such bracket.

### BACKBROUND TECHNIQUE

A wiper system can remove water, dust and/or other debris from the windshield of a vehicle, ensuring a good view of the driver, therefore, the wiper system is an important component of most vehicles.

The wiper system is usually powered by an electrical motor of the wiper. When the electrical motor of the wiper is running, it drives the wiper arm to perform reciprocating swing motion so as to wipe the vehicle windshield. At the same time, it is necessary to ensure that the wiper arm performs reciprocating swing motion in a specific angle range, i.e., ensure that the wiper arm doesn't exceed this specific angle range, so as to avoid conflicts and interferences between the wiper arm and other parts of the vehicle.

Document DE 10 2014 222 124 A1 discloses a bracket for an electric motor of a wiper of a vehicle according to the preamble of claim 1.

### THE CONTENTS OF THE INVENTION

The present invention proposes a bracket for an electrical motor having a motor crank, wherein said bracket is at least partially made of a rigid material and has:
a bracket body, at least a portion of which is of sheet-shaped structure;
a plurality of mechanical stoppers extending from the bracket body and forming two or more pairs of mechanical stoppers, different pair of mechanical stoppers being capable of restricting the movement of the motor crank within different swing ranges.

Optionally, when this bracket is applied to the electrical motor, only two of the plurality of mechanical stoppers of the bracket are in activated state capable of restricting the movement of the motor crank, while the other mechanical stoppers are in deactivated state of not restricting the movement of the motor crank.

Optionally, the mechanical stoppers in activated state are substantially perpendicular to the bracket body.

Optionally, the mechanical stoppers in deactivated state are substantially parallel to the bracket body.

Optionally, the plurality of mechanical stoppers extends substantially from one same plane.

Optionally, different pairs of mechanical stoppers (1A, 2A; 1B, 2B) define different swing angles (α, β) of the motor crank.

Optionally, different pairs of mechanical stoppers (1A, 2A; 1B, 2B) define different swing reversing positions of the motor crank.

Optionally, each of the plurality of mechanical stoppers (1A, 2A; 1B, 2B) is of sheet-shaped structure.

Optionally, at least one of the plurality of mechanical stoppers extends at an edge of the bracket body.

Optionally, at least one of the plurality of mechanical stoppers extends at somewhere other than an edge of the bracket body.

Optionally, the bracket comprises four mechanical stoppers (1A, 2A, 1B, 2B) forming two pairs of mechanical stoppers (1A, 2A; 1B, 2B).

Optionally, the four mechanical stoppers are the first, the second, the third and the fourth mechanical stopper (1A, 2A, 1B, 2B), in which the first mechanical stopper and the second mechanical stopper form a first pair of mechanical stoppers while the third mechanical stopper and the fourth mechanical stopper form a second pair of mechanical stoppers, and wherein the second, the third and the fourth mechanical stoppers are situated at an edge of the bracket body while the first mechanical stopper is situated at somewhere other than the edge of the bracket body and between the second and the fourth mechanical stoppers.

The present invention further proposes a wiper system for a vehicle, wherein the wiper system has an electrical motor and a bracket aforementioned.

Optionally, the wiper system further comprises a wiper assembly, wherein at least one of the electrical motor and the wiper assembly is fixed to the vehicle by at least the bracket.

According to one aspect of the present invention, a method for assembling the bracket (2) aforementioned comprises the following steps:
- selecting two mechanical stoppers from the plurality of mechanical stoppers according to desired swing range of the motor crank (4) of the electrical motor (1);
- setting the two mechanical stoppers in the activated state being capable of restricting the movement of the motor crank (4) within the desired swing range while the other mechanical stoppers are in the deactivated state of not restricting the movement of the motor crank (4).

Optionally, said selecting two mechanical stoppers from the plurality of mechanical stoppers according to desired swing range of the motor crank (4) of the electrical motor (1) includes, selecting two mechanical stoppers from the plurality of mechanical stoppers according to the desired swing angle and the desired swing reversing position of the motor crank (4) of the electrical motor (1).

Optionally, said setting the two mechanical stoppers in the activated state being capable of restricting the movement of the motor crank (4) within the desired swing range includes, bending the two mechanical stoppers from the state in which the two stoppers are substantially parallel to the bracket body (6) to the state in which the two stoppers are substantially perpendicular to the bracket body (6).

Optionally, the method further comprises removing at least one of the mechanical stoppers in the deactivated state from the bracket body (6).

Optionally, the method further comprises fixing the bracket (2) and the electrical motor (1) together by fasteners (3).

With the above-described structures, features and combinations thereof, the bracket proposed by the present invention can be flexibly adapted to different application situations to achieve different wiper arm swing ranges, therefore there is no need to design multiple brackets according to a particular wiper or to a particular mounting position on a vehicle. Meanwhile, the bracket achieving this function is of simple structure and low production costs.

Hereinafter, the preferred embodiments of the present invention will be described in detail with reference to the accompanying drawings, so that the foregoing features and advantages as well as other features and advantages of the present invention can be readily understood.

### DESCRIPTION OF THE DRAWINGS

Figures 1A and 1B show an embodiment of a wiper system for a vehicle;
Figure 2 shows an exploded view of the bracket and the electrical motor;
Figure 3-4 shows the case where the bracket is used for a first wiper;
Figure 5-6 shows the case where the bracket is used for a second wiper;
Figure 7 shows a first example state of the bracket, wherein all mechanical stoppers are in deactivated state;
Figure 8 shows a second example state of the bracket, wherein a first pair of mechanical stopper is in activated state, while the other mechanical stoppers are in deactivated state or have been removed;
Figure 9 shows a third example state of the bracket, wherein a second pair of mechanical stopper 1B, 2B is in activated state, while the other mechanical stoppers are in deactivated state or have been removed;
Figures 10A-B show two ways of fixing the bracket 2 and the vehicle body.

### DETAILED EMBODIMENTS

The technical solutions in the embodiments of the present invention will be clearly and completely described below with reference to the drawings of the present invention, and the same reference numerals in the drawings denote the same components. It is to be understood that the described embodiments are part of the embodiments of the present invention, but not all the embodiments. Based on the embodiments of the invention, all other embodiments obtained by those of ordinary skill in the art without carrying out inventive work are intended to be within the scope of the present invention.

Unless otherwise defined, the technical terms or scientific terms used herein should be of common meaning understood by those of ordinary skill in the art to which this invention pertains. The expressions "first", "second", "third", "fourth" and similar words used in the specification and claims of the present invention do not imply any order, quantity or importance, but only to distinguish different components or portions. Likewise, similar words such as "one", "this" and so on do not represent a quantity limit, but represent there is at least one.

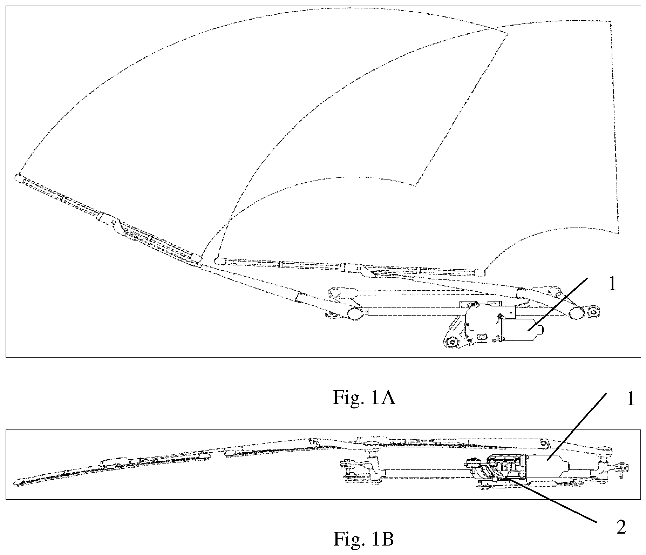

Vehicles are often equipped with a wiper system for wiping objects to be cleaned. As shown in Figures 1A-1B, a wiper system may include a wiper assembly or a wiper with a wiper arm, and an electrical motor 1 for providing power to the wiper assembly or the wiper.

The electrical motor 1 has a motor output shaft 5 and a motor crank 4. When the electrical motor 1 works, the output shaft 5 of the motor 1 drives the motor crank 4 to perform reciprocating motions. Further, the motor crank 4 transmits power to the wiper arm of the wiper, so as to cause the wiper arm to perform reciprocating motions, thereby wiping the objects to be cleaned in the vehicle. Said objects to be cleaned may be the front windshield, the rear glass, or other surface to be cleaned in the vehicle. In addition, the subject matter of the present invention may also be used for other non-vehicle applications

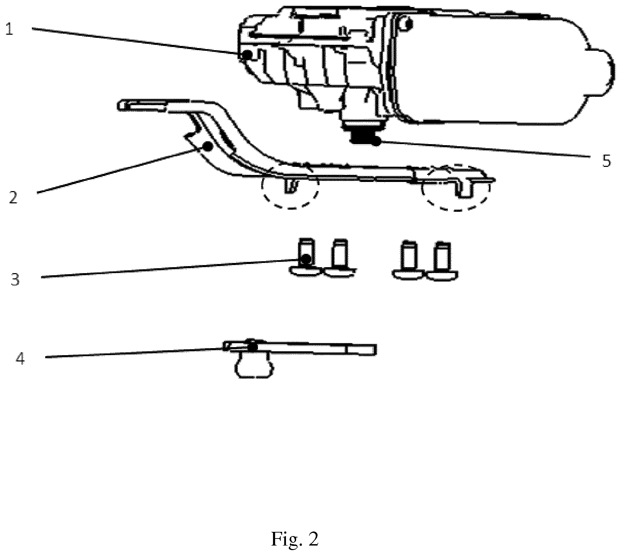

In order to limit the swing of the wiper arm within a specific range, it is necessary to limit the swing of the motor crank 4 which drives the wiper arm to a specific range. To this end, a bracket 2 is generally provided, on which a pair of mechanical stoppers (or referred to as a mechanical stopper pair) are provided, and such pair of mechanical stoppers block the movement of the motor crank 4 at two specific positions, such that the motor crank 4 can only swing within the sector angle range between the two specific positions (referred to as the swing reversing positions), as shown in Fig. 2.

Depending on different application situations, it is necessary to limit the swing of the motor crank 4 to different ranges. For example, when the same wiper motor is applied to a different wiper, it may be necessary to define a different swing range of the motor crank. For example, when the same wiper motor and the same wiper are installed in a different type of vehicle, it may be necessary to define a different swing range of the motor crank so as to define a different swing range of the wiper arm. As another example, for a wiper that is mounted on vehicles of the same type, the required swing range of the motor crank may be different for different driver position in a vehicle (such as left-hand drive and right-hand drive). At present, for the above situation, it is needed to design and produce different brackets to meet the various applications.

The present invention provides a bracket that is flexibly adapted for use in different applications and/or mounting situations. The bracket has mechanical stoppers which are redundantly provided, and different mechanical stoppers may be selected depending on different situations, therefore, one same bracket is able to flexibly suitable for different motors and/or wiper installation situations.

In an embodiment of the present invention, the bracket 2 has a bracket body 6 and a plurality of mechanical stoppers extending from the bracket body 6 and forming two or more pairs of mechanical stoppers. Different pairs of mechanical stoppers are able to define the movement of the motor crank 4 within different swing ranges. Thus, in accordance with the specific installation requirements, one pair of the two or more pairs of mechanical stoppers may be selected to be in activated state capable of restricting the movement of the crank, while the other pairs of mechanical stoppers are rendered in deactivated state not capable of restricting the movement of the crank or removed.

Other number of pairs of mechanical stoppers may be provided according to actual needs, such as three pairs, four pairs, five pairs, etc. Meanwhile, the total number of the mechanical stoppers does not have to be even, since different pairs of mechanical stoppers may have a common mechanical stopper. For example, five mechanical stoppers may be provided to form, for example, three pairs of mechanical stoppers, wherein a first pair of mechanical stoppers and a third pair of mechanical stoppers having a common mechanical stopper.

The "different swing range" of the motor crank described herein may have the meanings of two respects, wherein firstly, the swing angles of the motor crank are different, and secondly, the two swing reversing positions of the motor crank are different. Thus, the "swing range of the motor crank being different" indicates that at least one of the swing angles of the motor crank, the first swing reversing positions of the motor crank, and the second swing reversing positions of the motor crank are different.

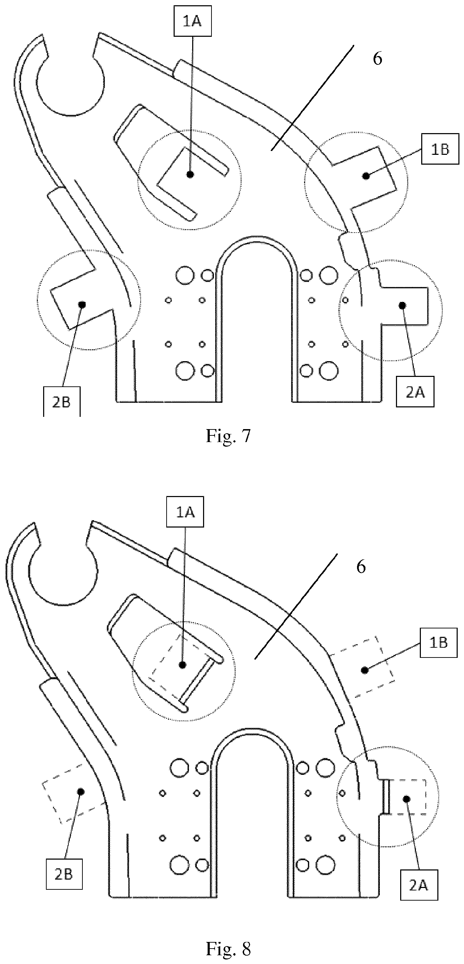

Taking the embodiment shown in Figs. 7 to 9 for example, the bracket 2 includes a first, a second, a third and a fourth mechanical stoppers 1A, 2A, 1B, 2B, the first mechanical stopper 1A and the second mechanical stopper 2A forming a first pair of mechanical stoppers, while the third mechanical stopper 1B and the fourth mechanical stopper portion 2B forming a second pair of mechanical stoppers. Wherein the second, the third and the fourth mechanical stoppers are situated at an edge of the bracket body while the first mechanical stopper is situated at somewhere other than the edges of the bracket body and is situated between the second and the fourth mechanical stoppers.

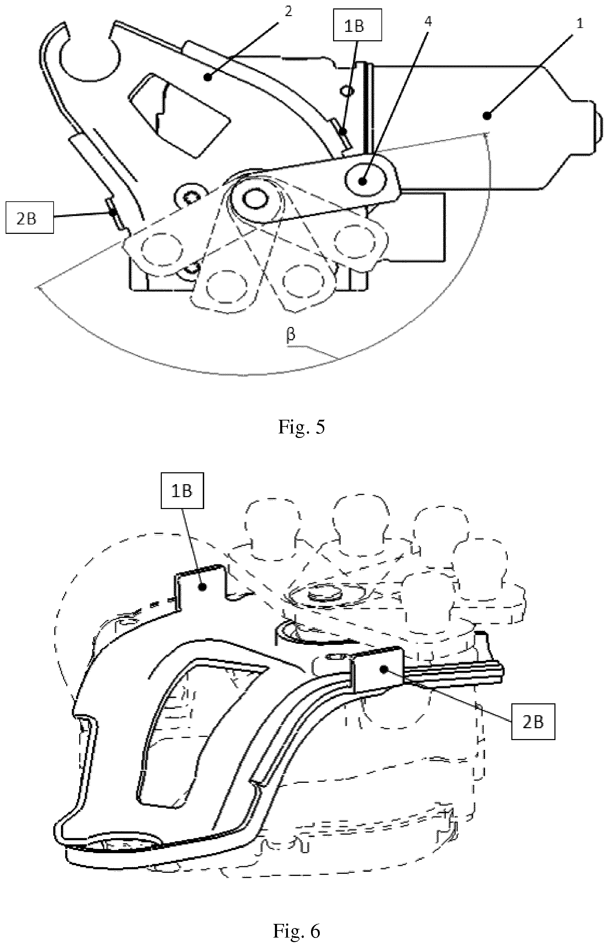

The mechanical stoppers may of sheet-shaped structure. In the embodiment shown in Figs. 6-7, the mechanical stoppers 1A, 2A, 1B, 2B are all in the form of substantially rectangular sheet structure. The mechanical stoppers in the form of sheet-shaped structure can be formed by cutting from the bracket body 6, so that the bracket 2 could be easily produced.

Figure 7 shows a first example state of the bracket 2, in which the bracket 2 has not been mounted to the electrical motor yet. In this state, the first pair of mechanical stoppers 1A, 2A and the second pair of mechanical stoppers 1B, 2B of the bracket 2 are in deactivated state, that is, each of the mechanical stoppers 1A, 2A, 1B, 2B is substantially parallel to the bracket body. At this time, the bracket 2 and its mechanical stoppers cannot restrict the movement of the motor crank 4, that is to say, the motor crank can go over the mechanical stoppers and rotate freely.

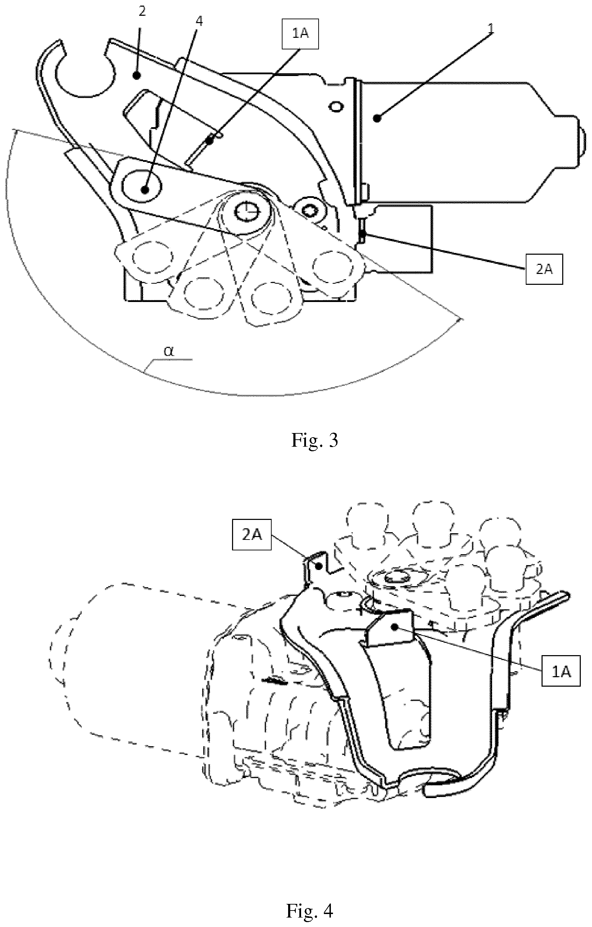

Fig. 8 shows a second example state of the bracket 2, in which the first pair of mechanical stoppers 1A, 2A are bent to be substantially perpendicular to the bracket body 6. The second example state may correspond to the application scenario shown in Figures 2 and 3, i.e. the bracket 2 is applied to a first wiper. Wherein the first pair of mechanical stoppers 1A, 2A are bent so as to be perpendicular to the plane from which the mechanical stoppers extend, so that the first pair of mechanical stoppers 1A, 2A are in activated state capable of blocking the motor crank 4. Thus, as shown in Fig. 3, the motor crank 4 is rotated back and forth within the angular range indicated by α shown in the figures under the blocking action of the first pair of mechanical stoppers 1A, 2A.

In the second example state shown in Fig. 8, the second pair of mechanical stoppers 1B, 2B may be removed as desired, as indicated by the dashed lines in the figure. Alternatively, in the case where the second pair of mechanical stoppers 1B, 2B do not hinder or interfere with the installation and operation of other components in the wiper system, the second pair of mechanical stoppers 1B, 2B may not be removed, but are maintained in deactivated state.

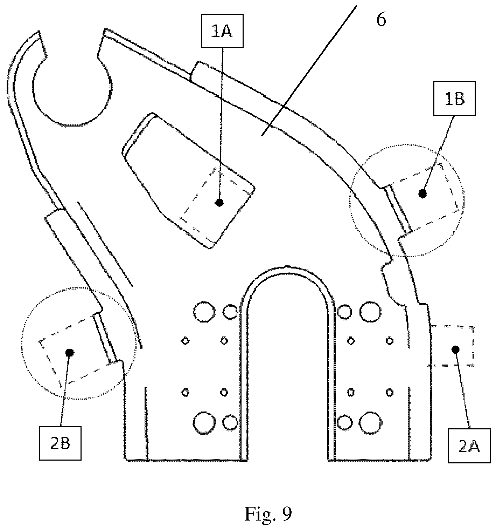

Fig. 9 shows a third example state of the bracket 2, in which the second pair of mechanical stoppers 1B, 2B are bent to be substantially perpendicular to the bracket body 6. The third example state may correspond to the application scenario shown in Figures 4 and 5, i.e. the bracket 2 is applied to a second wiper. Therefore, the second pair of mechanical stoppers 1B, 2B are bent so as to be perpendicular to the plane from which the mechanical stoppers extend, so that the second pair of mechanical stoppers 1B, 2B are in activated state capable of blocking the motor crank 4. Thus, as shown in Fig. 5, the motor crank 4 is rotated back and forth within the angular range indicated by β as shown in the figures under the blocking action of the second pair of mechanical stoppers 1B, 2B.

Similarly, in the third example state shown in Fig. 9, the first pair of mechanical stoppers 1A, 2A may be removed as desired, as indicated by the dashed lines in the figure. Alternatively, in the case where the first pair of mechanical stoppers 1A, 2A does not hinder or interfere with the installation and operation of other components in the wiper system, the first pair of mechanical stoppers 1A, 2A may not be removed, but are maintained in deactivated state.

As shown in Figs. 3-9, a plurality of mechanical stoppers may be provided so as to extend substantially from the same plane, i.e., the positions at which the plurality of mechanical stoppers extending from the bracket body 6 are substantially in the same plane. In this way, since the mechanical stoppers which are not applied are in deactivated state in which they are parallel to the bracket body, these mechanical stoppers would not block the motor crank, unless they are bent or adjusted in other ways.

It is possible to define the swing angle of the motor crank by setting the positions of the mechanical stoppers. The rotation angles α, β defined by different mechanical stoppers may be the same or different.

As shown in Figs. 1B, 2, 4 and 6, the bracket body 6 may be substantially of sheet-shaped structure. In addition, the bracket body 6 may have a profile suitable for the outer contour of the electrical motor 1, such that the bracket body 6 is at least partially fitted to the outer contour of the electrical motor 1 to save space and to assist in fixing the electrical motor 1. The bracket body 2 may be made of a rigid material, such as a metal material.

The assembly of the bracket 2 can be carried out by the following steps:
Firstly, two mechanical stoppers may be selected from the plurality of mechanical stoppers according to desired swing range of the motor crank 4 of the electrical motor 1 (including the desired swing angle and the desired swing reversing position of the motor crank 4 of the motor 1).
Secondly, setting the two mechanical stoppers in the activated state capable of restricting the movement of the motor crank 4 within the desired swing range; as for a specific embodiment, this step 2 may include bending the two mechanical stoppers from the state in which the two mechanical stoppers are substantially parallel to the bracket body 6 to the state in which the two mechanical stoppers are substantially perpendicular to the bracket body 6. The other mechanical stoppers are maintained in the deactivated state in which the movement of the motor crank 4 is not restricted or at least one mechanical stopper in the deactivated state can be removed from the bracket body 6.

As described above, the bracket 2 may also be used to fix or assist in fixing at least one of the electrical motor 1 and the wiper, for example in the embodiment shown in Figs. 1-2, the electrical motor 1 being fixed to the vehicle body at least by means of the bracket 2. For this embodiment, the assembly steps of the bracket 2 further comprises: fixing the bracket 2 to the electrical motor 1 via one or more fasteners 3 (the fastener 3 may be, but not limited to, screws, bolts, etc.).

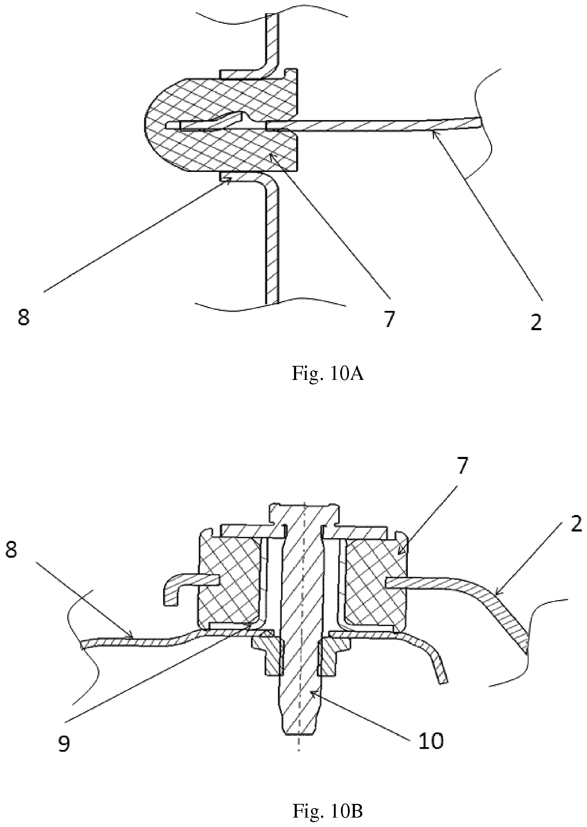

Then, the bracket 2 is fixed to the vehicle structure. The bracket 2 can be fixed to the vehicle body 8 by means of a rubber pad 7 which absorbs the vibration generated when the wiper is moved and prevents the bracket 2 from being in direct contact with the metal vehicle body structure, thereby reducing the vehicle noise. Figures 10A and 10B show two ways of fixing the bracket 2. According to the embodiment shown in Fig. 10A, the bracket 2 is firstly embedded into the rubber pad 7; and during the wiper is mounted, the rubber pad 7 is inserted into the hole previously provided in the vehicle body 8. According to the embodiment shown in Fig. 10B, the rubber pad 7 is in a ring shape, a lining 9 being inserted into the rubber pad 7, and the bracket 2 is embedded into the rubber pad 7; when mounted, the wiper is fixed to the vehicle body 8 by means of the fasteners 10, the lining 9 serves to limit the amount of compression of the rubber pad 7.

The term "and/or" means herein there may be three relationships. For example, A and/or B may represent the following three situations: the presence of A alone, the presence of A and B at the same time and the presence of B alone. In addition, the character "/" in this description generally indicates that the preceding and the subsequent objects associated are in "OR" relationship.

The term "substantially" as used herein is to be understood as being within the scope of normal tolerances in the art, for example within two standard deviations of the average value, unless specifically stated or explicitly stated in the context. "Substantially" may be understood to be within 10%, 9%, 8%, 7%, 6 %, 5%, 4%, 3%, 2%, 1%, 0.5%, 0.1%, 0.05% or 0.01% of a set value. Unless there is a clear context, all values provided herein may be corrected by the term "substantially".

The bracket proposed by the present invention has been described in detail with reference to the preferred embodiments above, however, various modifications and variations can be made to the specific embodiments shown in the description and the drawings without departing from the scope of the invention is defined by the appended claims.

### LIST OF REFERENCE NUMERALS

- 1: electrical motor
- 2: bracket
- 3: fastener
- 4: motor crank
- 5: motor output shaft
- 6: bracket body
- 7: rubber pad
- 8: vehicle body
- 9: lining
- 10: fastener
- 1A: a first mechanical stopper
- 2A: a second mechanical stopper
- 3A: a third mechanical stopper
- 4A: a fourth mechanical stopper

## Claims

1. A bracket (2) for an electrical motor (1) having a motor crank (4), said bracket (2) having:
a bracket body (6);
the bracket being **characterised in that** it comprises a plurality of mechanical stoppers (1A, 2A, 1B, 2B) extending from the bracket body (6) and forming two or more pairs of mechanical stoppers, wherein the different pairs of mechanical stoppers (1A, 2A; 1B, 2B) are capable of restricting the movement of the motor crank (4) within different swing ranges.

2. The bracket (2) as claimed in Claim 1, wherein when this bracket (2) is applied to the electrical motor (1), only two of the plurality of mechanical stoppers of the bracket (2) are in activated state of restricting the movement of the motor crank (4), while the other mechanical stoppers are in deactivated state of not restricting the movement of the motor crank (4).

3. The bracket (2) as claimed in Claim 2, wherein the mechanical stoppers in activated state are substantially perpendicular to the bracket body (6).

4. The bracket (2) as claimed in Claim 2, wherein the mechanical stoppers in deactivated state are substantially parallel to the bracket body (6).

5. The bracket (2) as claimed in Claim 1, wherein the plurality of mechanical stoppers extends substantially from one same plane.

6. The bracket (2) as claimed in Claim 1, wherein different pairs of mechanical stoppers (1A, 2A; 1B, 2B) define different swing angles (α, β) of the motor crank (4).

7. The bracket (2) as claimed in Claim 1, wherein different pairs of mechanical stoppers (1A, 2A; 1B, 2B) define different swing reversing positions of the motor crank (4).

8. The bracket (2) as claimed in Claim 1, wherein each of the plurality of mechanical stoppers (1A, 2A; 1B, 2B) is of sheet-shaped structure.

9. The bracket (2) as claimed in Claim 1, wherein at least one of the plurality of mechanical stoppers extends at an edge of the bracket body (6).

10. The bracket (2) as claimed in Claim 1, wherein at least one of the plurality of mechanical stoppers extends at somewhere other than an edge of the bracket body (6).

11. The bracket (2) as claimed in Claim 1, wherein the bracket (2) comprises four mechanical stoppers (1A, 2A, 1B, 2B) forming two pairs of mechanical stoppers (1A, 2A; 1B, 2B).

12. The bracket (2) as claimed in Claim 11, wherein the four mechanical stoppers are the first, the second, the third and the fourth mechanical stopper (1A, 2A, 1B, 2B), in which the first mechanical stopper and the second mechanical stopper form a first pair of mechanical stoppers while the third mechanical stopper and the fourth mechanical stopper form a second pair of mechanical stoppers, and wherein the second, the third and the fourth mechanical stoppers are situated at an edge of the bracket body while the first mechanical stopper is situated at somewhere other than the edge of the bracket body and between the second and the fourth mechanical stoppers.

13. The bracket (2) as claimed in Claim 1, wherein this bracket (2) is used to fix the electrical motor (1).

14. A wiper system for a vehicle, having an electrical motor (1) and a bracket (2) as claimed in any one of the preceding Claims.

15. The wiper system as claimed in Claim 14, further comprising a wiper assembly, wherein at least one of the electrical motor (1) and the wiper assembly is fixed to the vehicle by at least the bracket (2).

16. A method for assembling the bracket (2) as claimed in any one of the preceding Claims 1-13, comprising the following steps:
selecting two mechanical stoppers from the plurality of mechanical stoppers according to desired swing range of the motor crank (4) of the electrical motor (1);
setting the two mechanical stoppers in the activated state being capable of restricting the movement of the motor crank (4) within the desired swing range while the other mechanical stoppers are in the deactivated state of not restricting the movement of the motor crank (4).

17. The method as claimed in Claim 16, wherein said selecting two mechanical stoppers from the plurality of mechanical stoppers according to desired swing range of the motor crank (4) of the electrical motor (1) includes, selecting two mechanical stoppers from the plurality of mechanical stoppers according to the desired swing angle and the desired swing reversing position of the motor crank (4) of the electrical motor (1).

18. The method as claimed in Claim 16, wherein said setting the two mechanical stoppers in the activated state being capable of restricting the movement of the motor crank (4) within the desired swing range includes, bending the two mechanical stoppers from the state in which the two stoppers are substantially parallel to the bracket body (6) to the state in which the two stoppers are substantially perpendicular to the bracket body (6).

19. The method as claimed in Claim 16, further comprising removing at least one of the mechanical stoppers in the deactivated state from the bracket body (6).

20. The method as claimed in Claim 16, further comprising fixing the bracket (2) and the electrical motor (1) together by fasteners (3).

## Patentansprüche

1. Halterung (2) für einen Elektromotor (1), der eine Motorkurbel (4) aufweist, wobei die Halterung (2) Folgendes aufweist:
einen Halterungskörper (6),
wobei die Halterung **dadurch gekennzeichnet ist, dass** sie Folgendes umfasst:
eine Vielzahl von mechanischen Anschlägen (1A, 2A, 1B, 2B), die sich von dem Halterungskörper (6) erstrecken und zwei oder mehrere Paare von mechanischen Anschlägen bilden,
wobei die verschiedenen Paare von mechanischen Anschlägen (1A, 2A; 1B, 2B) in der Lage sind, die Bewegung der Motorkurbel (4) innerhalb verschiedener Schwenkbereiche zu begrenzen.

2. Halterung (2) nach Anspruch 1, wobei bei Anlegen dieser Halterung (2) an den Elektromotor (1) sich nur zwei aus der Vielzahl von mechanischen Anschlägen der Halterung (2) in einem aktivierten Zustand, in dem sie die Bewegung der Motorkurbel (4) begrenzen, befinden, während sich die anderen mechanischen Anschläge in einem deaktivierten Zustand, in dem sie die Bewegung der Motorkurbel (4) nicht begrenzen, befinden.

3. Halterung (2) nach Anspruch 2, wobei die mechanischen Anschläge in dem aktivierten Zustand im Wesentlichen rechtwinklig zu dem Halterungskörper (6) verlaufen.

4. Halterung (2) nach Anspruch 2, wobei die mechanischen Anschläge in dem deaktivierten Zustand im Wesentlichen parallel zu dem Halterungskörper (6) verlaufen.

5. Halterung (2) nach Anspruch 1, wobei sich die Vielzahl von mechanischen Anschlägen im Wesentlichen von der gleichen Ebene erstreckt.

6. Halterung (2) nach Anspruch 1, wobei verschiedene Paare von mechanischen Anschlägen (1A, 2A; 1B, 2B) verschiedene Schwenkwinkel (α, β) der Motorkurbel (4) festlegen.

7. Halterung (2) nach Anspruch 1, wobei verschiedene Paare von mechanischen Anschlägen (1A, 2A; 1B, 2B) verschiedene Schwenkumkehrpositionen der Motorkurbel (4) festlegen.

8. Halterung (2) nach Anspruch 1, wobei jeder aus der Vielzahl von mechanischen Anschlägen (1A, 2A; 1B, 2B) eine plattenförmige Struktur aufweist.

9. Halterung (2) nach Anspruch 1, wobei sich wenigstens einer aus der Vielzahl von mechanischen Anschlägen an einer Kante des Halterungskörpers (6) erstreckt.

10. Halterung (2) nach Anspruch 1, wobei sich wenigstens einer aus der Vielzahl von mechanischen Anschlägen an einer anderen Stelle als an einer Kante des Halterungskörpers (6) erstreckt.

11. Halterung (2) nach Anspruch 1, wobei die Halterung (2) vier mechanische Anschläge (1A, 2A, 1B, 2B) umfasst, die zwei Paare von mechanischen Anschlägen (1A, 2A; 1B, 2B) bilden.

12. Halterung (2) nach Anspruch 11, wobei die vier mechanischen Anschläge der erste, der zweite, der dritte und der vierte mechanische Anschlag (1A, 2A, 1B, 2B) sind, wobei der erste mechanische Anschlag und der zweite mechanische Anschlag ein erstes Paar von mechanischen Anschlägen bilden, während der dritte mechanische Anschlag und der vierte mechanische Anschlag ein zweites Paar von mechanischen Anschlägen bilden, und wobei sich der zweite, der dritte und der vierte mechanische Anschlag an einer Kante des Halterungskörpers befinden, während sich der erste mechanische Anschlag an einer anderen Stelle als an der Kante des Halterungskörpers und zwischen dem zweiten und dem vierten mechanischen Anschlag befindet.

13. Halterung (2) nach Anspruch 1, wobei diese Halterung (2) dazu dient, den Elektromotor (1) zu befestigen.

14. Wischeranlage für ein Fahrzeug, die einen Elektromotor (1) und eine Halterung (2) nach einem der vorhergehenden Ansprüche aufweist.

15. Wischeranlage nach Anspruch 14, ferner umfassend eine Wischeranordnung, wobei der Elektromotor (1) und/ oder die Wischeranordnung wenigstens über die Halterung (2) an dem Fahrzeug befestigt sind bzw. ist.

16. Verfahren zum Montieren der Halterung (2) nach einem der vorhergehenden Ansprüche 1 bis 13, umfassend die folgenden Schritte:
Auswählen von zwei mechanischen Anschlägen aus der Vielzahl von mechanischen Anschlägen gemäß dem gewünschten Schwenkbereich der Motorkurbel (4) des Elektromotors (1),
Versetzen der zwei mechanischen Anschläge in den aktivierten Zustand, in dem sie in der Lage sind, die Bewegung der Motorwelle (4) innerhalb des gewünschten Schwenkbereichs zu begrenzen, während sich die anderen mechanischen Anschläge in dem deaktivierten Zustand befinden, in dem sie die Bewegung der Motorkurbel (4) nicht begrenzen.

17. Verfahren nach Anspruch 16, wobei das Auswählen von zwei mechanischen Anschlägen aus der Vielzahl von mechanischen Anschlägen gemäß dem gewünschten Schwenkbereich der Motorkurbel (4) des Elektromotors (1) das Auswählen von zwei mechanischen Anschlägen aus der Vielzahl von mechanischen Anschlägen gemäß dem gewünschten Schwenkbereich und der gewünschten Schwenkumkehrposition der Motorkurbel (4) des Elektromotors (1) umfasst.

18. Verfahren nach Anspruch 16, wobei das Versetzen der zwei mechanischen Anschläge in den aktivierten Zustand, in dem sie in der Lage sind, die Bewegung der Motorkurbel (4) innerhalb des gewünschten Schwenkbereichs zu begrenzen, das Biegen der zwei mechanischen Anschläge aus dem Zustand, in dem die zwei Anschläge im Wesentlichen parallel zu dem Halterungskörper (6) verlaufen, in den Zustand, in dem die zwei Anschläge im Wesentlichen rechtwinklig zu dem Halterungskörper (6) verlaufen, umfasst.

19. Verfahren nach Anspruch 16, ferner umfassend das Entfernen wenigstens eines der in dem deaktivierten Zustand befindlichen mechanischen Anschläge von dem Halterungskörper (6).

20. Verfahren nach Anspruch 16, ferner umfassend das Befestigen der Halterung (2) und des Elektromotors (1) aneinander mittels Befestigungsvorrichtungen (3).

## Revendications

1. Console (2) pour un moteur électrique (1) ayant une manivelle de moteur (4), ladite console (2) ayant :
un corps de console (6) ;
la console étant **caractérisée en ce qu'**elle comprend :
une pluralité de butées mécaniques (1A, 2A, 1B, 2B) s'étendant depuis le corps de console (6) et formant deux ou plus de deux paires de butées mécaniques, les différentes paires de butées mécaniques (1A, 2A ; 1B, 2B) étant capables de limiter le mouvement de la manivelle de moteur (4) dans différentes plages d'oscillations.

2. Console (2) selon la revendication 1, dans laquelle, quand cette console (2) est appliquée au moteur électrique (1), seulement deux parmi la pluralité de butées mécaniques de la console (2) sont dans un état activé limitant le mouvement de la manivelle de moteur (4) tandis que les autres butées mécaniques sont dans un état désactivé ne limitant pas le mouvement de la manivelle de moteur (4).

3. Console (2) selon la revendication 2, dans laquelle les butées mécaniques, dans l'état activé, sont sensiblement perpendiculaires au corps de console (6).

4. Console (2) selon la revendication 2, dans laquelle les butées mécaniques, dans l'état désactivé, sont sensiblement parallèles au corps de console (6).

5. Console (2) selon la revendication 1, dans laquelle la pluralité de butées mécaniques s'étend sensiblement à partir d'un même plan.

6. Console (2) selon la revendication 1, dans laquelle différentes paires de butées mécaniques (1A, 2A ; 1B, 2B) définissent différents angles d'oscillations (α, β) de la manivelle de moteur (4) .

7. Console (2) selon la revendication 1, dans laquelle différentes paires de butées mécaniques (1A, 2A ; 1B, 2B) définissent différentes positions d'inversion d'oscillations de la manivelle de moteur (4).

8. Console (2) selon la revendication 1, dans laquelle chacune parmi la pluralité de butées mécaniques (1A, 2A ; 1B, 2B) présente une structure en forme de feuille.

9. Console (2) selon la revendication 1, dans laquelle au moins l'une parmi la pluralité de butées mécaniques s'étend au niveau d'un bord du corps de console (6).

10. Console (2) selon la revendication 1, dans laquelle au moins l'une parmi la pluralité de butées mécaniques s'étend à un autre endroit qu'au niveau d'un bord du corps de console (6).

11. Console (2) selon la revendication 1, la console (2) comprenant quatre butées mécaniques (1A, 2A, 1B, 2B) formant deux paires de butées mécaniques (1A, 2A ; 1B, 2B).

12. Console (2) selon la revendication 11, dans laquelle les quatre butées mécaniques sont la première, la deuxième, la troisième et la quatrième butée mécanique (1A, 2A, 1B, 2B), la première butée mécanique et la deuxième butée mécanique formant une première paire de butées mécaniques tandis que la troisième butée mécanique et la quatrième butée mécanique forment une deuxième paire de butées mécaniques, et la deuxième, la troisième et la quatrième butée mécanique étant situées au niveau d'un bord du corps de console tandis que la première butée mécanique est située à un autre endroit qu'au niveau du bord du corps de console et entre la deuxième et la quatrième butée mécanique.

13. Console (2) selon la revendication 1, cette console (2) étant utilisée pour fixer le moteur électrique (1).

14. Système d'essuie-glace pour un véhicule, présentant un moteur électrique (1) et une console (2) selon l'une quelconque des revendications précédentes.

15. Système d'essuie-glace selon la revendication 14, comprenant en outre un ensemble d'essuie-glaces, au moins l'un parmi le moteur électrique (1) et l'ensemble d'essuie-glaces étant fixé au véhicule par au moins la console (2).

16. Procédé d'assemblage de la console (2) selon l'une quelconque des revendications précédentes 1 à 13, comprenant les étapes suivantes :
sélection de deux butées mécaniques à partir de la pluralité de butées mécaniques en fonction de la plage d'oscillations souhaitée de la manivelle de moteur (4) du moteur électrique (1) ;
réglage des deux butées mécaniques dans l'état activé de manière à ce qu'elles soient capables de limiter le mouvement de la manivelle de moteur (4) à l'intérieur de la plage d'oscillations souhaitée tandis que les autres butées mécaniques sont dans l'état désactivé ne limitant pas le mouvement de la manivelle de moteur (4).

17. Procédé selon la revendication 16, dans lequel ladite sélection de deux butées mécaniques à partir de la pluralité de butées mécaniques en fonction de la plage d'oscillations souhaitée de la manivelle de moteur (4) du moteur électrique (1) comprend la sélection de deux butées mécaniques à partir de la pluralité de butées mécaniques en fonction de l'angle d'oscillation souhaité et de la position d'inversion de l'oscillation souhaitée de la manivelle de moteur (4) du moteur électrique (1).

18. Procédé selon la revendication 16, dans lequel ledit réglage des deux butées mécaniques dans l'état activé de manière à ce qu'elles soient capables de limiter le mouvement de la manivelle de moteur (4) à l'intérieur de la plage d'oscillations souhaitée inclut la flexion des deux butées mécaniques à partir de l'état dans lequel les deux butées sont sensiblement parallèles au corps de console (6) jusqu'à l'état dans lequel les deux butées sont sensiblement perpendiculaires au corps de console (6).

19. Procédé selon la revendication 16, comprenant en outre l'enlèvement, hors du corps de console (6), d'au moins l'une des butées mécaniques dans l'état désactivé.

20. Procédé selon la revendication 16, comprenant en outre la fixation de la console (2) et du moteur électrique (1) ensemble par des attaches (3).
